# EUROPÄISCHE PATENTANMELDUNG

(11) **EP 4 056 041 A1**
(43) Veröffentlichungstag der Anmeldung: **14.09.2022**
(21) Anmeldenummer: 21161709.7
(22) Anmeldetag: 10.03.2021
(51) Int. Cl.: A21B 5/02

(54) **BACKVORRICHTUNG, NACHRÜSTSATZ UND VERFAHREN ZUR HERSTELLUNG VON GEBACKENEN WAFFELFORMKÖRPERN**

(71) Anmelder: Bühler Food Equipment GmbH, 2100 Leobendorf (AT)
(72) Erfinder: Bibaric, Markus, 3400 Kierling (AT); Zant, Stefan, 2116 Niederleis (AT); Steinböck, Michael, 3042 Holzleiten (AT); Scheibenpflug, Georg, 3423 St. Andrä-Wördern (AT); Stilling, Gottfried, 1210 Wien (AT); Wachert, Andreas, Wien 1210 (AT)
(74) Vertreter: Puchberger & Partner Patentanwälte

(57) **Zusammenfassung**

Backvorrichtung zur Herstellung von gebackenen, bevorzugt essbaren, Waffelformkörpern, insbesondere zur Herstellung von im Wesentlichen drucklos aus einem Teig gebackenen Waffeln, umfassend mehrere Oberplattenanordnungen (1) und Unterplattenanordnungen (2), die in getrennten Umlaufbahnen (3, 6) in Längsrichtung der Backvorrichtung gegensinnig umlaufen, und die eine Backstrecke (4) in gleicher Richtung durchlaufen und dabei paarweise aufeinanderliegend Backformen für die zu backenden Waffelformkörper begrenzen oder bilden, wobei die Oberplattenanordnungen (1) jeweils geteilt ausgebildet sind und mindestens zwei scharnierartig gegenüber einander beweglich angeordnete obere Backplatten (5) umfassen.

## Beschreibung

Die Erfindung betrifft eine Backvorrichtung, einen Nachrüstsatz und ein Verfahren gemäß den Oberbegriffen der unabhängigen Patentansprüche.

Backvorrichtungen zur Herstellung von gebackenen Waffelformkörpern sind in unterschiedlichen Ausführungsformen bekannt.

Gattungsgemäße Backvorrichtungen weisen beispielsweise eine Vielzahl an Backplatten auf, die paarweise aufeinander gelegt werden, um Backformen zu bilden. Die Backplatten sind hierfür meist massive Stahl- bzw. Stahlgussplatten, die jeweils an einer Seite eine Backfläche aufweisen. Jede Backplatte wird in der Backvorrichtung erhitzt und auf einer Seite mit einem flüssigen bis pastösen Teig in Kontakt gebracht, wobei der Teig in der Regel nur auf die Unterplatte aufgetragen wird. Anschließend wird eine zweite Backplatte auf die mit Teig versehene andere Backplatte aufgesetzt, womit eine Backform gebildet und geschlossen wird.

Typische Dimensionen derartiger Backplatten sind eine Breite von über 1m, beispielsweise von etwa 1,4m. Die Länge einer derartigen Platte kann im Bereich von 10 bis 20cm liegen.

Beispielsweise können auf einer gattungsgemäßen Backvorrichtung Waffelformkörper bzw. Backprodukte wie beispielsweise Belgische Waffeln, Hefeteig-Waffeln oder sogenannte Soft-Waffeln hergestellt werden.

Als Teig werden insbesondere Teige und Backmassen zur Herstellung dieser oder ähnlicher Waffelformkörper und Backprodukte bezeichnet.

In der Praxis hat sich herausgestellt, dass die hergestellten Waffelformkörper in der Mitte der Backform eine größere Dicke aufweisen als gewünscht, womit die Qualität der Waffelformkörper herabgesetzt ist. Um diesen Effekt zu beheben, wurde gemäß Stand der Technik versucht, die Backplatten starrer auszubilden, insbesondere zusätzliche Versteifungen oder Stellschrauben im Mittenbereich vorzusehen. In der Praxis sind derartige Versteifungen jedoch mit einem erhöhten Aufwand verbunden.

Aufgabe der Erfindung ist es nun, eine Backvorrichtung zu schaffen, bei der die Qualität der hergestellten Waffelformkörper verbessert ist. Insbesondere soll die Qualität mit einfachen, kostengünstigen und praktikablen Mitteln verbessert werden.

Die erfindungsgemäße Aufgabe wird insbesondere durch die Merkmale der unabhängigen Patentansprüche gelöst.

In Untersuchungen wurde festgestellt, dass die heißen Backplatten durch Kontakt mit dem verhältnismäßig kühlen Teig und der zusätzlichen Kühlung durch die Verdampfung der flüchtigen Bestandteile, wie z.B. Wasser und Triebgase, des Teiges an ihren Backflächen gekühlt werden. Zudem werden die Backplatten außen, also an ihren Rückseiten beheizt. Dadurch weisen die Backplatten an ihren die Backform begrenzenden Seiten eine kleinere Temperatur auf als an ihren Rückseiten.

Als die Backform begrenzenden Seite wird jene Seite bzw. jene Fläche der Backplatte bezeichnet, die dazu eingerichtet ist, die Produktkavität zu begrenzen, also insbesondere jene Seite der Backplatte, die beim Backvorgang mit dem Teig in Berührung kommt.

Durch diese Temperaturunterschiede kommt es zu Wärmespannungen und zu einem Verziehen oder Wölben der Backplatten. Insbesondere wölben sich die Backplatten weg von dem Innenraum der Backform, wodurch die unerwünschte erhöhte Dicke bzw. Kernstärke der Waffelformkörper insbesondere im mittleren Bereich der Backplatten auftritt.

Zur erfindungsgemäßen Lösung des durch diesen Effekt hervorgerufenen Problems wird entgegen den Ansätzen des Standes der Technik die Backplatte im Mittenbereich nicht verstärkt, sondern geschwächt.

Insbesondere wird die obere Backplatte geteilt. Zwar tritt auch bei den durch die Teilung kürzer ausgestalteten Backplatten eine Wölbung auf. Diese bewirkt aber aufgrund der kürzeren Biegelinie eine weitaus geringere Zunahme der Dicke der Waffelformkörper. Zudem ist bevorzugt vorgesehen, dass die oberen Backplatten einer Backplattenanordnung im Wesentlichen einzeln auf der Unterplattenanordnung aufliegen. Auch dadurch kann das Ausmaß der Dickenvergrößerung stark reduziert werden.

Die Erfindung betrifft eine Backvorrichtung zur Herstellung von gebackenen, bevorzugt essbaren, Waffelformkörpern, insbesondere zur Herstellung von im Wesentlichen drucklos aus einem Teig gebackenen Waffeln, umfassend mehrere Oberplattenanordnungen und Unterplattenanordnungen, die in getrennten Umlaufbahnen in Längsrichtung der Backvorrichtung gegensinnig umlaufen, und die eine Backstrecke in gleicher Richtung durchlaufen und dabei paarweise aufeinanderliegend Backformen für die zu backenden Waffelformkörper begrenzen oder bilden.

Bevorzugt ist vorgesehen, dass die Oberplattenanordnungen jeweils geteilt ausgebildet sind und/oder mindestens zwei gegenüber einander beweglich angeordnete obere Backplatten umfassen, wobei die Beweglichkeit insbesondere scharnierartig ausgebildet ist.

Bevorzugt ist vorgesehen, dass jeweils zwei Backplatten einer Oberplattenanordnung über eine Verbindungsvorrichtung scharnierartig miteinander verbunden sind.

Gegebenenfalls ist vorgesehen, dass die Verbindungsvorrichtung ein biegsames Verbindungselement wie insbesondere ein biegsames Metallplättchen ist oder umfasst.

Bevorzugt ist vorgesehen, dass zwischen den oberen Backplatten einer Oberplattenanordnung jeweils ein Spalt freigehalten ist.

Die zwei oberen Backplatten der Oberplattenanordnung sind über die Verbindungsvorrichtung scharnierartig miteinander verbunden.

Zusätzlich wirkt die Verbindungsvorrichtung als Abstandhalter, sodass zwischen den oberen Backplatten der Oberplattenanordnung der Spalt freigehalten ist.

Die Oberplattenanordnung weist bevorzugt eine rechteckige Form auf. Die Scharnierachse und/oder der Spalt verlaufen bevorzugt quer zur längeren Seite der rechteckigen Form.

Gegebenenfalls ist vorgesehen, dass sich die Unterplattenanordnungen jeweils über die gesamte Breite der ihnen entlang der Backstrecke zugeordneten Oberplattenanordnung erstrecken.
Gegebenenfalls ist vorgesehen, dass die Unterplattenanordnungen jeweils eine einzige durchgehende einstückige untere Backplatte aufweisen.
Gegebenenfalls ist vorgesehen, dass die Unterplattenanordnungen jeweils mindestens zwei untere Backplatten aufweisen, die starr miteinander verbunden sind. Gegebenenfalls ist vorgesehen, dass die oberen Backplatten einer Oberplattenanordnung entlang der Backstrecke an Ihrer die Backform begrenzenden Seite durch den Kontakt mit dem Teig eine kleinere Temperatur aufweisen als an ihrer Rückenseite und dadurch aufgewölbt sind.

Gegebenenfalls ist vorgesehen, dass die oberen Backplatten einer Oberplattenanordnung durch die geteilte Ausbildung im Wesentlichen unabhängig voneinander aufgewölbt sind. "Im Wesentlichen", da die unabhängige Aufwölbung gegebenenfalls durch die Verbindungsvorrichtung in geringem Maße eingeschränkt wird.

Gegebenenfalls ist vorgesehen, dass zur Bewegung der Oberplattenanordnungen entlang einer oberen Umlaufbahn ein oberer Endlosförderer vorgesehen ist.

Gegebenenfalls ist vorgesehen, dass die oberen Backplatten einer Oberplattenanordnung jeweils eigenständig mit dem oberen Endlosförderer gekoppelt sind.

Gegebenenfalls ist vorgesehen, dass der obere Endlosförderer die oberen Backplatten hängend, insbesondere im Wesentlichen horizontal ausgerichtet und mit ihren die Backformen bildenden Seiten stets nach unten weisend, transportiert. Gegebenenfalls ist vorgesehen, dass der obere Endlosförderer die oberen Backplatten am Beginn der Backstrecke zum Bilden der Backformen auf den unteren Backplatten absetzt und nach der Backstrecke zum Öffnen der Backformen wieder abhebt. Gegebenenfalls ist vorgesehen, dass der obere Endlosförderer mehrere quer verlaufende, insbesondere stangenförmig ausgebildete, Träger zum hängenden Transport der oberen Backplatten aufweist,
wobei die oberen Backplatten einer Oberplattenanordnung nebeneinander an einem Träger angebracht sind.

Gegebenenfalls ist vorgesehen, dass sich die Träger, bevorzugt durchgehend, über die gesamte Breite der Backplattenanordnungen erstrecken. Insbesondere ist vorgesehen, dass sich die Träger über die gesamte Breite des oberen Endlosförderers erstrecken. Gegebenenfalls ist vorgesehen, dass die oberen Backplatten an den Trägern schwimmend gelagert sind.

Gegebenenfalls ist vorgesehen, dass an den oberen Backplatten jeweils zwei beabstandet voneinander angeordnete Laschen angebracht sind, wobei in jeder Lasche eine Laschenfreistellung vorgesehen ist.

Gegebenenfalls ist vorgesehen, dass ein Träger, zur Kopplung der Oberplattenanordnung mit dem oberen Endlosförderer durch alle Laschenfreistellungen der oberen Backplatten einer Oberplattenanordnung geführt ist. Eine Lasche mit einer Laschenfreistellung kann auch als Haken ausgebildet sein oder wirken.

Gegebenenfalls ist vorgesehen, dass die Laschenfreistellungen ein Übermaß gegenüber dem Querschnitt des Trägers aufweisen.

Gegebenenfalls ist vorgesehen, dass der Träger entlang der Backstrecke beweglich innerhalb der Laschenfreistellungen angeordnet ist.

Gegebenenfalls ist vorgesehen, dass zur Bewegung der Unterplattenanordnungen entlang einer unteren Umlaufbahn ein unterer Endlosförderer vorgesehen ist, und dass der untere Endlosförderer die Unterplattenanordnungen und die entlang der Backstrecke auf die Unterplattenanordnungen aufgesetzten Oberplattenanordnungen durch die Backstrecke bewegt.

Gegebenenfalls ist vorgesehen, dass Positioniermittel vorgesehen sind, die die oberen Backplatten einer Oberplattenanordnung gegenüber der entlang der Backstrecke zugeordneten Unterplattenanordnung positionieren.

Gegebenenfalls ist vorgesehen, dass ein Teigauftragsbereich zum Auftrag des Teigs auf eine geöffnete Backform, ein Schließbereich zum Schließen der Backformen, ein Öffenbereich zum Öffnen der Backformen und ein Entnahmebereich zum Entnehmen der gebackenen Waffelformkörper vorgesehen sind.

Gegebenenfalls ist vorgesehen, dass die Backstrecke nach dem Teigauftragsbereich und vor dem Entnahmebereich, insbesondere nach dem Schließbereich und vor dem Öffenbereich angeordnet ist.

Insbesondere betrifft die Erfindung einen Nachrüstsatz zur Bildung einer erfindungsgemäßen Backvorrichtung umfassend mindestens eine Oberplattenanordnung, die geteilt ausgebildet ist und/oder mindestens zwei gegenüber einander beweglich angeordnete obere Backplatten umfasst.

Gegebenenfalls ist vorgesehen, dass jeweils zwei Backplatten einer Oberplattenanordnung über eine Verbindungsvorrichtung scharnierartig miteinander verbunden sind.

Gegebenenfalls ist vorgesehen, dass zwischen den oberen Backplatten einer Oberplattenanordnung jeweils ein Spalt freigehalten ist.

Bevorzugt ist vorgesehen, dass eine Vielzahl an Oberplattenanordnungen entlang einer oberen Umlaufbahn in Längsrichtung der Backvorrichtung umlaufen.

Bevorzugt ist vorgesehen, dass eine Vielzahl an Unterplattenanordnungen entlang einer unteren Umlaufbahn in Längsrichtung der Backvorrichtung umlaufen.

Gegebenenfalls ist vorgesehen, dass eine von dem Teigauftragsbereich bis zum Entnahmebereich in einer Ebene verlaufende Backstrecke vorgesehen ist.

Gegebenenfalls ist vorgesehen, dass die Backformen jeweils aus einer unteren Backplattenanordnung und aus einer auf deren Oberseite abgesetzten, oberen Backplattenanordnung gebildet sind.

Gegebenenfalls ist vorgesehen, dass die oberen und unteren Backplatten einander gegenseitig zugeordnete Positionierelemente tragen, die beim Absetzen einer oberen Backplatten auf einer unteren Backplatte in Eingriff kommen und die obere Backplatten während ihres Absetzens auf die darunterliegende, untere Backplatte ausrichten.

Bevorzugt setzt der obere Förderer die von ihm hängend getragenen, oberen Backplatten am Beginn der Backstrecke auf den unteren Backplatten ab und lässt die auf den unteren Backplatten liegenden, oberen Backplatten los. Bevorzugt transportiert der untere Förderer die aus den unteren Backplatten und aus den auf diesen abgesetzten oberen Backplatten gebildeten Backformen durch die Backstrecke. Am Ende der Backstrecke übernimmt der obere Förderer bevorzugt die auf den unteren Backplatten abgesetzten, oberen Backplatten und hebt sie von den unteren Backplatten ab. Dabei werden die Backformen aufgelöst und die in ihnen gebackenen Formkörper werden aus den Backformen ausgegeben bzw. entnommen. Vom Ende der Backstrecke weg transportiert der obere Förderer die oberen Backplatten jeweils, insbesondere im Wesentlichen parallel zur Backstreckenebene ausgerichtet, zurück zum Anfang der Backstrecke, wo er sie wieder auf den Backplatten des unteren Förderers absetzt und gegebenenfalls an diesen übergibt.

Bevorzugt werden bei der Backvorrichtung die oberen Backplatten bei ihrer Übergabe an die Backplatten des unteren Förderers jeweils im Wesentlichen parallel zur Backstreckenebene ausgerichtet auf die in der Backstreckenebene liegenden, unteren Backplatten abgesenkt. Dadurch wird bei jeder einzelnen Backform die nach unten weisende Backfläche der oberen Backplatte senkrecht zur Backstreckenebene auf die Oberseite der Teig- bzw. Backmasse aufgesetzt, die auf der nach oben weisenden Backfläche der unteren Backplatte liegt.

Die absinkenden, oberen Backplatten richten sich während ihres Absinkens bevorzugt selbsttätig gegenüber der unteren Backplatte aus.

Gegebenenfalls können die Positionierelemente der oberen Backplatten als in Querrichtung des Backofens horizontal ausgerichtete Ausrichtbolzen ausgebildet sein, die beim Absenken der oberen Backplatten in die mit Einführschrägen versehenen, vertikale ausgerichteten Aufnahmeschlitze der Positionierelemente der unteren Backplatten eingreifen.

In weiterer Folge wird die Erfindung anhand von exemplarischen Ausführungsformen weiter beschrieben.
Figur 1 zeigt eine schematische Darstellung von Komponenten einer möglichen Ausführungsform einer erfindungsgemäßen Backvorrichtung.
Figur 2 zeigt eine Schnittdarstellung von Komponenten der Backvorrichtung sowie zwei vergrößerte Details.
Figur 3 zeigt eine Schrägansicht der Anordnung aus Figur 2.
Figur 4 zeigt eine schematische Schrägansichten von Details einer Backplattenanordnung.

Wenn nicht anders angegeben, so entsprechen die Bezugszeichen in den Figuren folgenden Komponenten:
Oberplattenanordnung 1, Unterplattenanordnung 2, obere Umlaufbahn 3, Backstrecke 4, obere Backplatte 5, untere Umlaufbahn 6, untere Backplatte 7, Backformseite 8, Rückenseite 9, oberer Endlosförderer 10, Träger 11, Lasche 12, Laschenfreistellung 13, unterer Endlosförderer 14, Positioniermittel 15, Teigauftragsbereich 16, Schließbereich 17, Öffenbereich 18, Entnahmebereich 19, Breite 20, Wölblinie 21, Verbindungsvorrichtung 22, Spalt 23.

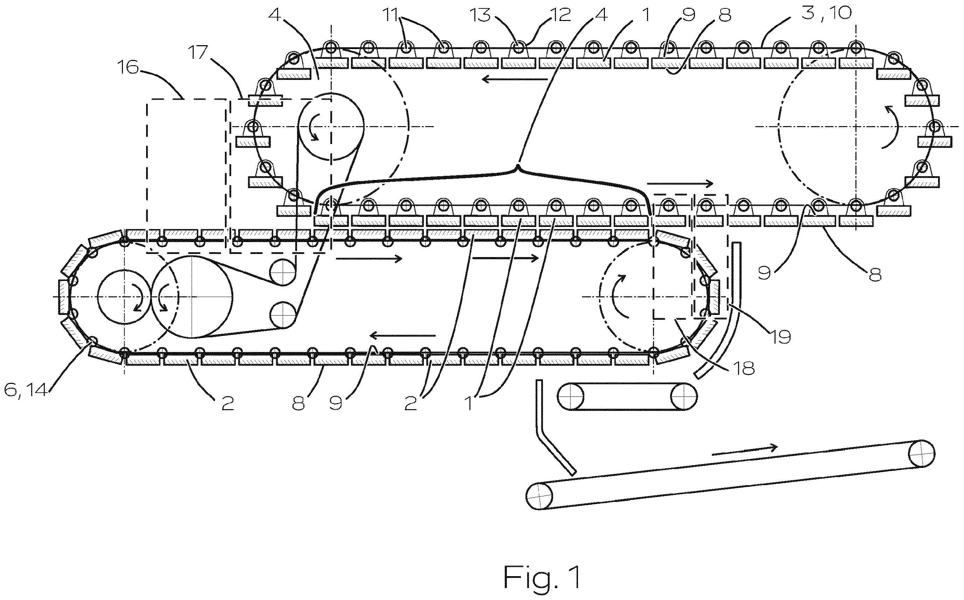

**Figur** 1 zeigt eine schematische Ansicht von maßgeblichen Komponenten einer Ausführungsform einer Backvorrichtung. Die Backvorrichtung umfasst mehrere Oberplattenanordnungen 1 und mehre Unterplattenanordnungen 2. Die Oberplattenanordnungen 1 werden, insbesondere kontinuierlich, entlang einer oberen Umlaufbahn 3 bewegt. Hierzu ist ein oberer Endlosförderer 10 vorgesehen. Die Unterplattenanordnungen 2 werden, insbesondere kontinuierlich, entlang einer unteren Umlaufbahn 6 bewegt, wobei hierfür ein unterer Endlosförderer 14 vorgesehen ist. Die beiden Endlosförderer 10, 14 bewegen sich gegensinnig, also in entgegengesetzte Drehrichtung. Zur Bildung von Backformen werden die Oberplattenanordnungen 1 und die Unterplattenanordnungen 2 zusammengeführt. Hierzu ist eine Backstrecke 4 vorgesehen, entlang derer sich die Oberplattenanordnungen 1 und die Unterplattenanordnungen 2 in die gleiche Richtung bewegen.

Die Oberplattenanordnungen 1 werden bevorzugt hängend am oberen Endlosförderer 10 transportiert. Hierzu umfasst der obere Endlosförderer 10 mehrere Träger 11. Die Oberplattenanordnungen 1 umfassen Laschen 12 mit Laschenfreistellungen 13. Zur Koppelung der Oberplattenanordnungen 1 mit dem oberen Endlosförderer 10 sind die Träger 11 durch die Laschenfreistellungen 13 geführt. Bevorzugt werden die Oberplattenanordnungen 1 derart transportiert, dass sie im Wesentlichen waagrecht ausgerichtet mit ihren Backformseiten 8 stets nach unten weisen.

Entlang der Backvorrichtung sind mehrere Bereiche angeordnet. In einem Teigauftragsbereich 16 wird ein Teig auf die geöffneten Backplattenanordnungen 1,2, insbesondere auf die Unterplattenanordnungen 2, aufgetragen. Dies geschieht mit einer nicht dargestellten herkömmlichen Teigauftragsvorrichtung, die je nach herzustellendem Produkt angepasst oder gewählt sein kann.

Nach dem Teigauftragsbereich 16 ist ein Schließbereich 17 vorgesehen, in dem die Backformen geschlossen werden. Dieses Schließen geschieht im vorliegenden Fall dadurch, dass jeweils eine Oberplattenanordnung 1 auf eine Unterplattenanordnung 2 aufgelegt wird. In weiterer Folge werden die mit dem Teig gefüllten Backformen, insbesondere eine Unterplattenanordnung 2 und eine dieser Unterplattenanordnung 2 zugeordnete Oberplattenanordnung 1 entlang einer Backstrecke 4 bewegt. Beim Auflegen der Oberplattenanordnung 1 auf die Unterplattenanordnung 2 wird die Oberplattenanordnung 1 auf der Unterplattenanordnung 2 abgelegt. Entlang der Backstrecke 4 liegt die Oberplattenanordnung 1 somit auf der Unterplattenanordnung 2 auf. Die Bewegung der Oberplattenanordnung 1 geschieht bevorzugt durch die Bewegung der Unterplattenanordnung 2.

Die Oberplattenanordnungen 1 sind hängend an den Trägern 11 des oberen Endlosförderers 10 angebracht. An der Oberplattenanordnung 1 sind mindestens zwei Laschen 12 vorgesehen, wobei jede Lasche 12 eine Öffnung 13 aufweist, durch die der Träger 11 hindurchgeführt wird. Beim Aufsetzen der Oberplattenanordnungen 1 auf die Unterplattenanordnungen 2 kann die unmittelbare Koppelung der Oberplattenanordnung 1 mit dem Träger 11 gelöst werden. Dies geschieht bevorzugt dadurch, dass die Oberplattenanordnung 1, insbesondere deren Laschen 12, jeweils Laschenfreistellungen 13 aufweisen, die größer sind als der Querschnitt des Trägers 11. Hängt die Oberplattenanordnung 1 an dem Träger 11, so liegen die Laschen 12 bzw. die Ränder der Laschenfreistellungen 13 jeweils am Träger 11 an. Ist die Oberplattenanordnung 1 jedoch auf der Unterplattenanordnung 2 aufgesetzt, so trägt nicht mehr der Träger 11 die Oberplattenanordnung 1 sondern die Unterplattenanordnung 2. Dadurch wird zwischen dem Träger 11 und den Laschen 12 ein Freiraum bzw. ein gewisses Spiel erzeugt. Dieses Spiel kann beispielsweise dazu dienen, Unterschiede der Bewegungen des oberen Endlosförderers 10 und des unteren Endlosförderers 14 auszugleichen. Insbesondere kann auch vermieden werden, dass Unstetigkeiten im Antrieb, beispielsweise durch einen Polygoneffekt, den Transport der Backformen beeinträchtigen.

Die Oberplattenanordnung 1 und die Unterplattenanordnung 2 werden durch eine nicht dargestellte Heizvorrichtung beheizt. Diese Beheizung geschieht bevorzugt entfernt von der Backstrecke 4. Die heißen Backplattenanordnungen 1,2 weisen eine ausreichende Wärmekapazität auf, um entlang der Backstrecke 4 aus dem aufgetragenen Teig Waffelformkörper zu backen.

Nach der Backstrecke 4 ist ein Öffenbereich 18 vorgesehen, in dem die Backformen dadurch geöffnet werden, dass die Oberplattenanordnung 1 und die Unterplattenanordnung 2 voneinander getrennt werden. Dem Öffenbereich 18 ist ein Entnahmebereich 19 nachgeordnet. In diesem Entnahmebereich 19 werden die gebackenen Waffelformkörper entnommen und abtransportiert.

In allen Ausführungsformen sind die Endlosförderer 10, 14 bevorzugt derart ausgebildet, dass die Unterplattenanordnungen 2 im Wesentlichen synchronisiert mit den Oberplattenanordnungen 1 bewegt werden. Hierzu können die beiden Antriebe der Endlosförderer 10, 14 synchronisiert und/oder miteinander verbunden sein. Alternativ kann auch nur ein Antrieb vorgesehen sein, der beide Endlosförderer 10, 14 antreibt.

Der untere Endlosförderer 14 und die untere Umlaufbahn 6 verlaufen bevorzugt unterhalb der Backstrecke 4. Die obere Umlaufbahn 3 und der obere Endlosförderer 10 verlaufen bevorzugt oberhalb der Backstrecke 4.

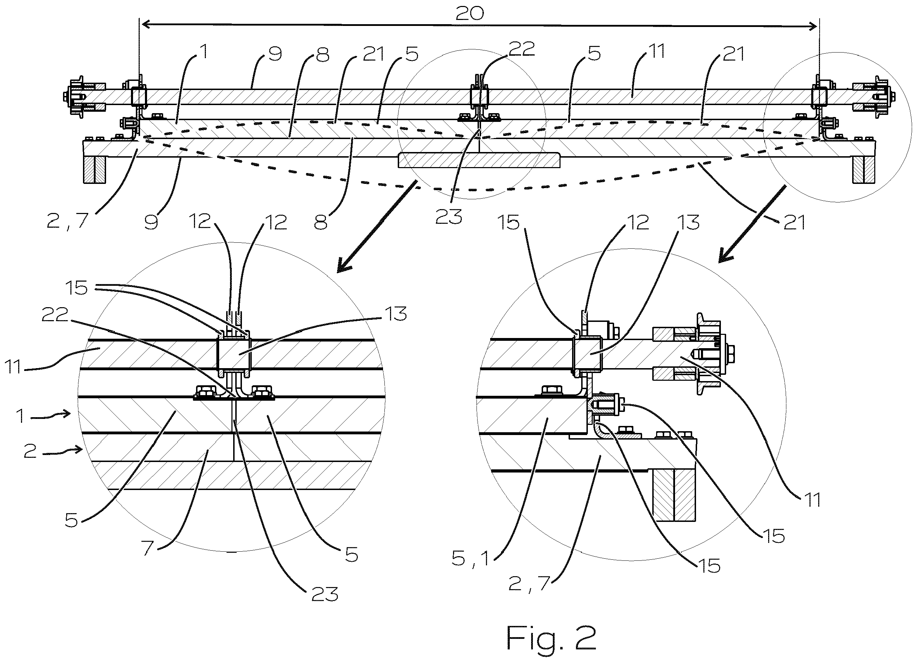

**Figur 2** zeigt eine Schnittdarstellung von Komponenten einer möglichen Ausführungsform einer erfindungsgemäßen Backvorrichtung. Insbesondere zeigt Figur 2 eine Unterplattenanordnung 2, auf der eine Oberplattenanordnung 1 aufgelegt ist. Die Oberplattenanordnung 1 ist geteilt ausgebildet und umfasst zwei obere Backplatten 5. Die Teilung der Oberplattenanordnung 1 ist im vorliegenden Fall mittig angeordnet. Es entspricht jedoch auch dem Erfindungsgedanken, mehr als zwei obere Backplatten 5, beispielsweise drei, vier oder mehr obere Backplatten 5 vorzusehen.

Die Verbindungsvorrichtung umfasst in der vorliegenden Ausführungsform ein biegsames Plättchen, das mit zwei benachbarten oberen Backplatten 5 einer Oberplattenanordnung 1 verbunden und insbesondere verschraubt ist. Das biegsame Plättchen wirkt bevorzugt als Abstandhalter, sodass zwischen den oberen Backplatten 5 der Spalt 23 freigehalten wird. Das biegsame Plättchen wirkt bevorzugt scharnierartig, sodass eine Beweglichkeit der oberen Backplatten 5 gegenüber einander ermöglicht wird.

In allen Ausführungsformen kann die Verbindungsvorrichtung 22 an der Rückenseite 9 der Oberplattenanordnung 1 angebracht oder vorgesehen sein. In der vorliegenden Ausführungsform ist ein Plättchen aus Metall an die Rückenseiten 9 beider oberer Backplatten 5 einer Oberplattenanordnung 1 geschraubt. Das Plättchen kann beispielsweise ein biegsamer Blechstreifen mit einer Dicke von 0,5 mm bis 2 mm, insbesondere mit einer Dicke von 1 mm sein. Alternativ kann auch ein Scharnier mit einem Gelenk vorgesehen sein. Gegebenenfalls kann die Verbindungsvorrichtung 22 auch entfallen.

Die oberen Backplatten 5 einer Oberplattenanordnung 1 liegen auf der Unterplattenanordnung 2 auf. Die Unterplattenanordnung 2 erstreckt sich hier über die gesamte Breite 20 der Oberplattenanordnung 1. Die Unterplattenanordnung 2 ist im Gegensatz zur Oberplattenanordnung 1 jedoch im Wesentlichen starr ausgebildet. Im vorliegenden Fall umfasst die Unterplattenanordnung 2 zwei untere Backplatten 7, die jedoch starr miteinander verbunden sind. Alternativ kann auch eine einzige, durchgehende untere Backplatte 7 vorgesehen sein.

Die untere Backplatte 7 kann in allen Ausführungsformen selbsttragend ausgebildet sein, und sich von einem seitlichen Auflager bis zum anderen seitlichen Auflager, auf der anderen Seite der Unterplattenanordnung 2, erstrecken. Über die Auflager ist die Unterplattenanordnung 2 mit dem unteren Endlosförderer 14 verbunden.

Im Gegensatz dazu liegen die oberen Backplatten 5 einer Oberplattenanordnung 1 scharnierartig verbunden, nebeneinander auf der Unterplattenanordnung 2 auf. Beim Trennen dieser Auflage, insbesondere im Öffenbereich 18, werden die oberen Backplatten 5 einer Oberplattenanordnung 1 dennoch gemeinsam abtransportiert. Dies geschieht über einen Träger 11, der die oberen Backplatten 5 einer Oberplattenanordnung 1 mit dem oberen Endlosförderer 10 koppelt.

Die oberen Backplatten 5 sind bevorzugt schwimmend an den Trägern 11 gelagert. Dadurch können sich die oberen Backplatten 5 in gewissem Maße frei bewegen. Jedoch sind Positioniermittel 15 vorgesehen, die eine Positionierung der Oberplattenanordnung 1 und/oder der Unterplattenanordnung 2 ermöglichen.

Die oberen Backplatten 5 weisen jeweils zwei Laschen 12 auf. In den Laschen 12 ist jeweils eine Laschenfreistellung 13 zur Durchführung des Trägers 11 vorgesehen. So können die oberen Backplatten 5 jeweils am Träger 11 hängend befestigt sein. Am Träger 11 sind Positioniermittel 15 vorgesehen, die im vorliegenden Fall als Anschlag für die Laschen 12 bzw. die Ränder der Laschenfreistellungen 13 wirken. Dadurch wird die Lage der oberen Backplatten 5 in Längsrichtung des Trägers 11, also quer zur Längsrichtung der Backvorrichtung, festgelegt oder zumindest eingeschränkt. Die Unterplattenanordnung 2 umfasst im vorliegenden Fall ebenfalls Positioniermittel 15. Diese Positioniermittel 15 sind beispielsweise als seitliche Stege oder Winkel ausgebildet, durch die die Lage der Oberplattenanordnung 1, insbesondere der oberen Backplatten 5 gegenüber der Unterplattenanordnung 2 eingeschränkt oder festgelegt wird.

Durch die Positioniermittel 15 wird eine Positionierung der oberen Backplatten 5 relativ zur Unterplattenanordnung 2, insbesondere entlang der Backstrecke 4, bewirkt. Bevorzugt ist in allen Ausführungsformen zwischen den oberen Backplatten 5 einer Oberplattenanordnung 1 ein Spalt 23 freigehalten. Dieser Spalt 23 ermöglicht die im Wesentlichen freie Wölbung der oberen Backplatten 5 gegenüber einander.

Insbesondere werden die Backplatten 5, 7 an ihren Backformseiten 8 durch den Teig gekühlt. Als Backformseiten 8 werden jene Seiten bzw. jene Flächen der Backplatten 5, 7 bezeichnet, die dazu eingerichtet sind, die Produktkavität zu begrenzen, also insbesondere jene Seiten der Backplatten 5, 7, die beim Backvorgang mit dem Teig in Berührung kommen. Aus diesem Grund, und aufgrund der Beheizung an den Rückenseiten 9, weisen die Backplatten 5, 7 an ihren die Backformen begrenzenden Backformseiten 8 eine geringere Temperatur auf als an ihren Rückenseiten 9. Dadurch wölben sich die Backplatten 5, 7 entlang einer Wölblinie 21, die zur besseren Ersichtlichkeit stark übertrieben eingezeichnet ist. Die Unterplattenanordnung 2 ist im Wesentlichen starr ausgebildet und weist dadurch eine durchgehende Wölblinie 21 auf. Die Oberplattenanordnung 1 umfasst zwei im Wesentlichen unabhängig voneinander gewölbte obere Backplatten 5 auf, die entlang zweier Wölblinien 21 verlaufen. Durch die geteilte Ausbildung der Oberplattenanordnung 1 kann der Abstand zwischen der Wölblinie 21 der Oberplattenanordnung 1 und der Wölblinien 21 der Unterplattenanordnung 2 verringert werden, wodurch durch einfache Mittel die Qualität der Waffelformkörper verbessert werden kann.

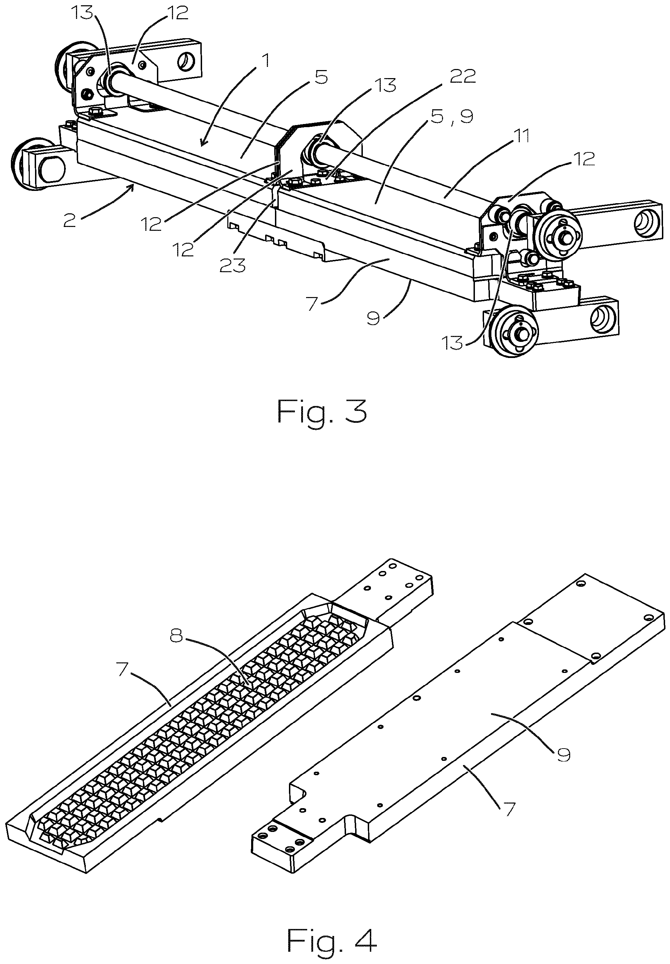

**Figur 3** zeigt eine Schrägansicht der Komponenten, die auch in Figur 2 dargestellt sind. In der vorliegenden Position ist die Oberplattenanordnung 1 auf die Unterplattenanordnung 2 aufgelegt, wie es entlang der Backstrecke 4 der Fall ist. In dieser Position hängen die oberen Backplatten 5 der Oberplattenanordnung 1 bevorzugt nicht am Träger 11 sondern sind direkt an der Unterplattenanordnung 2 aufgelegt. Dabei weisen die Laschenfreistellungen 13 ein gewisses Übermaß zum Querschnitt des Trägers 11 auf, sodass sich der Träger 11 um ein gewisses Maß innerhalb der Laschenfreistellungen 13 bewegen kann.

Jede obere Backplatte 5 weist bevorzugt zwei Laschen 12 mit je einer Laschenfreistellung 13 auf. Die Laschen 12 sind beabstandet voneinander mit der jeweiligen Oberen Backplatte 5 verbunden. Dadurch werden zwei Aufhängungspunkte für jede obere Backplatte 5 geschaffen. Bevorzugt sind die Laschenfreistellungen 13 nach oben hin zulaufend ausgebildet. Dadurch erfolgt eine Lagezentrierung der oberen Backplatten 5 gegenüber dem Träger 11, wenn die oberen Backplatten 5 am Träger 11 hängen.

Wird jedoch die Oberplattenanordnung 1 auf die Unterplattenanordung 2 aufgelegt, so befindet sich der Träger 11 nicht mehr in direkter Anlage mit dem Rand der Laschenfreistellung 13 und kann sich um ein gewisses Maß in dieser bewegen.

**Figur 4** zeigt zwei Teile einer Backplattenanordnung 1,2 im vorliegenden Fall einer Unterplattenanordnung 2. Die Unterplattenanordnung 2 umfasst in der vorliegenden Ausführungsform zwei untere Backplatten 7, die nebeneinander dargestellt sind, wobei bei der linken Backplatte 7 die Backformseite 8 und bei der rechte Backplatte 7 die Rückenseite 9 nach oben weist. An der Backformseite 8 ist in der vorliegenden Ausführungsform eine Gravur vorgesehen, die die Form der Oberfläche des herzustellenden Waffelformkörpers bestimmt. Diese Form bzw. diese Gravur kann je nach herzustellendem Waffelformkörper angepasst sein.

Zur Bildung der Unterplattenanordnung 2 werden die beiden unteren Backplatten 7 starr miteinander verbunden. Insbesondere wird eine nicht dargestellte starre Verbindungsplatte mit beiden unteren Backplatten 7 verschraubt, um eine durchgehende, im Wesentlichen starre Unterplattenanordnung 2 zu bilden.

Eine exemplarische Oberplattenanordnung 1, nicht dargestellt, ist im Wesentlichen genauso aufgebaut, wobei jedoch keine starre Verbindung der oberen Backplatten 5 erfolgt. Vielmehr werden die oberen Backplatten 5 mit Laschen 12 versehen, damit sie an den Trägern 11 angebracht werden können.

## Patentansprüche

1. **Backvorrichtung** zur Herstellung von gebackenen, bevorzugt essbaren, Waffelformkörpern, insbesondere zur Herstellung von im Wesentlichen drucklos aus einem Teig gebackenen Waffeln, umfassend mehrere Oberplattenanordnungen (1) und Unterplattenanordnungen (2), die in getrennten Umlaufbahnen (3, 6) in Längsrichtung der Backvorrichtung gegensinnig umlaufen, und die eine Backstrecke (4) in gleicher Richtung durchlaufen und dabei paarweise aufeinanderliegend Backformen für die zu backenden Waffelformkörper begrenzen oder bilden,
**dadurch gekennzeichnet,**
**dass** die Oberplattenanordnungen (1) jeweils geteilt ausgebildet sind und mindestens zwei gegenüber einander beweglich angeordnete obere Backplatten (5) umfassen.

2. Backvorrichtung nach Anspruch 1, **dadurch gekennzeichnet,**
- **dass** jeweils zwei gegenüber einander beweglich angeordnete obere Backplatten (5) einer Oberplattenanordnung (1) über eine Verbindungsvorrichtung (22) scharnierartig miteinander verbunden sind,
- und gegebenenfalls dass die Verbindungsvorrichtung (22) ein biegsames Verbindungselement wie insbesondere ein biegsames Metallplättchen ist oder umfasst.

3. Backvorrichtung nach Anspruch 1 oder 2, **dadurch gekennzeichnet, dass** zwischen den oberen Backplatten (5) einer Oberplattenanordnung (1) jeweils ein Spalt (23) freigehalten ist.

4. Backvorrichtung nach einem der Ansprüche 1 bis 3, **dadurch gekennzeichnet,**
- **dass** sich die Unterplattenanordnungen (2) jeweils im Wesentlichen über die gesamte Breite (20) der ihnen entlang der Backstrecke (4) zugeordneten Oberplattenanordnung (1) erstrecken,
- wobei die Unterplattenanordnungen (2) jeweils eine einzige durchgehende einstückige untere Backplatte (7) aufweisen,
- oder wobei die Unterplattenanordnungen (2) jeweils mindestens zwei untere Backplatten (7) aufweisen, die starr miteinander verbunden sind.

5. Backvorrichtung nach einem der Ansprüche 1 bis 4, **dadurch gekennzeichnet, dass** die oberen Backplatten (5) einer Oberplattenanordnung (1) entlang der Backstrecke (4) durch den Kontakt mit dem Teig und/oder durch die Beheizung an ihrer Rückenseite (9) an ihrer die Backform begrenzenden Backformseite (8) eine kleinere Temperatur aufweisen als an ihrer Rückenseite (9) und dadurch aufgewölbt sind, wobei die oberen Backplatten (5) einer Oberplattenanordnung (1) durch die geteilte Ausbildung im Wesentlichen unabhängig voneinander aufgewölbt sind.

6. Backvorrichtung nach einem der Ansprüche 1 bis 5, **dadurch gekennzeichnet,**
- **dass** zur Bewegung der Oberplattenanordnungen (1) entlang einer oberen Umlaufbahn (3) ein oberer Endlosförderer (10) vorgesehen ist,
- und **dass** die oberen Backplatten (5) einer Oberplattenanordnung (1) jeweils eigenständig mit dem oberen Endlosförderer (10) gekoppelt sind,
- **dass** der obere Endlosförderer (10) die oberen Backplatten (5) jeweils hängend, insbesondere im Wesentlichen horizontal ausgerichtet und mit ihren die Backformen bildenden Seiten stets nach unten weisend, transportiert,
- und **dass** der obere Endlosförderer (10) die oberen Backplatten (5) am Beginn der Backstrecke (4) zum Bilden der Backformen auf den unteren Backplatten (6) absetzt und nach der Backstrecke (4) zum Öffnen der Backformen wieder abhebt.

7. Backvorrichtung nach Anspruch 6, **dadurch gekennzeichnet,**
- **dass** der obere Endlosförderer (10) mehrere quer verlaufende, insbesondere stangenförmig ausgebildete, Träger (11) zur Befestigung, insbesondere zum hängenden Transport der oberen Backplatten (5) aufweist,
- wobei wenigstens zwei obere Backplatten (5) einer Oberplattenanordnung (1) nebeneinander an einem Träger (11) angebracht sind,
- und insbesondere dass die oberen Backplatten (5) an den Trägern (11) schwimmend gelagert sind.

8. Backvorrichtung nach einem der Ansprüche 1 bis 7, **dadurch gekennzeichnet,**
- **dass** an den oberen Backplatten (5) jeweils zwei voneinander beabstandet angeordnete Laschen (12) angebracht sind,
- wobei in jeder Lasche (12) eine Laschenfreistellung (13) vorgesehen ist,
- und **dass** der Träger (11), zur Kopplung der Oberplattenanordnung (1) mit dem oberen Endlosförderer (10) durch alle Laschenfreistellungen (13) der oberen Backplatten (5) einer Oberplattenanordnung (1) geführt ist.

9. Backvorrichtung nach Anspruch 8, **dadurch gekennzeichnet,**
- **dass** die Laschenfreistellungen (13) ein Übermaß gegenüber dem Querschnitt des Trägers (11) aufweisen, und dass der Träger (11) entlang der Backstrecke (4) beweglich innerhalb der Laschenfreistellungen (13) angeordnet ist.

10. Backvorrichtung nach einem der Ansprüche 1 bis 9, **dadurch gekennzeichnet,**
- **dass** zur Bewegung der Unterplattenanordnungen (2) entlang einer unteren Umlaufbahn (6) ein unterer Endlosförderer (14) vorgesehen ist,
- und **dass** der untere Endlosförderer (14) die Unterplattenanordnungen (2) und die entlang der Backstrecke (4) auf die Unterplattenanordnungen (2) aufgesetzten Oberplattenanordnungen (1) durch die Backstrecke (4) bewegt.

11. Backvorrichtung nach einem der Ansprüche 1 bis 10, **dadurch gekennzeichnet, dass** Positioniermittel (15) vorgesehen sind, die die oberen Backplatten (5) einer Oberplattenanordnung (1) gegenüber der entlang der Backstrecke (4) zugeordneten Unterplattenanordnung (2) positionieren.

12. Backvorrichtung nach einem der Ansprüche 1 bis 11, **dadurch gekennzeichnet, dass** ein Teigauftragsbereich (16) zum Auftrag des Teigs auf eine geöffnete Backform, ein Schließbereich (17) zum Schließen der Backformen, ein Öffenbereich (18) zum Öffnen der Backformen und ein Entnahmebereich (19) zum Entnehmen der gebackenen Waffelformkörper vorgesehen sind, und dass die Backstrecke (4) nach dem Teigauftragsbereich (16) und vor dem Entnahmebereich (19), insbesondere nach dem Schließbereich (17) und vor dem Öffenbereich (18) angeordnet ist.

13. **Nachrüstsatz** zur Bildung einer Backvorrichtung nach einem der Ansprüche 1 bis 12, umfassend mindestens eine Oberplattenanordnung (1), die geteilt ausgebildet ist und mindestens zwei gegenüber einander beweglich angeordnete obere Backplatten (5) umfasst.

14. **Verfahren** zur Herstellung von gebackenen, bevorzugt essbaren, Waffelformkörpern, insbesondere zur Herstellung von im Wesentlichen drucklos aus einem Teig gebackenen Waffeln,
- wobei mehrerer Oberplattenanordnungen (1) und Unterplattenanordnungen (2) entlang getrennter Umlaufbahnen (3, 6) in Längsrichtung der Backvorrichtung bewegt werden,
- wobei die Oberplattenanordnungen (1) und die Unterplattenanordnungen (2) die getrennten Umlaufbahnen (3, 6) gegensinnig umlaufen,
- und wobei die Oberplattenanordnungen (1) und die Unterplattenanordnungen (2) eine Backstrecke (4) in gleicher Richtung durchlaufen und dabei paarweise aufeinanderliegend Backformen für die zu backenden Waffelformkörper begrenzen oder bilden,
**dadurch gekennzeichnet,**
- **dass** die Oberplattenanordnungen (1) jeweils geteilt ausgebildet sind und mindestens zwei gegenüber einander beweglich angeordnete obere Backplatten (5) umfassen,
- **dass** die oberen Backplatten (5) einer Oberplattenanordnung (1) entlang der Backstrecke (4) mit einem Teig in Kontakt gebracht werden und an ihrer Rückenseite (9) beheizt werden und dadurch an ihrer die Backform begrenzenden Backformseite (8) eine kleinere Temperatur aufweisen als an ihrer Rückenseite (9) und sich dadurch aufwölben,
- und **dass** sich die oberen Backplatten (5) einer Oberplattenanordnung (1) durch die geteilte Ausbildung im Wesentlichen unabhängig voneinander aufwölben.

15. Verfahren nach Anspruch 14, **dadurch gekennzeichnet, dass** ein oberer Endlosförderer (10) vorgesehen ist, der die oberen Backplatten (5) jeweils hängend, insbesondere im Wesentlichen horizontal ausgerichtet und mit ihren die Backformen bildenden Seiten stets nach unten weisend, transportiert,
- und dass der obere Endlosförderer (10) die oberen Backplatten (5) am Beginn der Backstrecke (4) zum Bilden der Backformen auf den unteren Backplatten (6) absetzt und nach der Backstrecke (4) zum Öffnen der Backformen wieder abhebt.
